**Europäisches Patentamt**

**European Patent Office**

**Office européen des brevets**

(11) Numéro de publication : **0 365 385 B1**

(12) **FASCICULE DE BREVET EUROPEEN**

(45) Date de publication du fascicule du brevet :
15.07.92 Bulletin 92/29

(21) Numéro de dépôt : **89402657.4**

(22) Date de dépôt : **27.09.89**

(51) Int. Cl.⁵ : **B23P 19/02,** F22B 37/00, F28F 11/00

(54) **Dispositif de pose d'un manchon d'extraction dans un tube de générateur de vapeur et procédé d'extraction correspondant d'un tronçon de tube.**

(30) Priorité : **17.10.88 FR 8813655**

(43) Date de publication de la demande :
**25.04.90 Bulletin 90/17**

(45) Mention de la délivrance du brevet :
**15.07.92 Bulletin 92/29**

(84) Etats contractants désignés :
**BE CH DE ES LI SE**

(56) Documents cités :
**EP-A- 0 005 670**
**EP-A- 0 086 341**
**EP-A- 0 153 563**
**EP-A- 0 186 489**
**EP-A- 0 227 535**
**EP-A- 0 298 841**

(73) Titulaire : **FRAMATOME**
**Tour Fiat 1, Place de la Coupole**
**F-92400 Courbevoie (FR)**

(72) Inventeur : **Jacquier, Paul**
**37 Chemin des Bruyéres**
**F-69160 Tassin La Demi-Lune (FR)**

(74) Mandataire : **Bouget, Lucien et al**
**Cabinet Lavoix 2, Place d'Estienne d'Orves**
**F-75441 Paris Cédex 09 (FR)**

## Description

L'invention concerne un dispositif de pose d'un manchon d'extraction dans un tube de générateur de vapeur et un procédé d'extraction correspondant d'un tronçon de tube et plus particulièrement d'un tronçon de tube éloigné des extrémités du tube.

Les échangeurs de chaleur tels que les générateurs de vapeur des réacteurs nucléaires à eau sous pression comportent généralement une plaque tubulaire de grande épaisseur traversée par des tubes qui affleurent sur une des faces de cette plaque tubulaire constituant sa face d'entrée et qui sont saillants de l'autre côté de la plaque tubulaire dont la face de sortie est en contact avec l'intérieur du générateur de vapeur recevant l'eau d'alimentation à vaporiser. La face d'entrée de la plaque tubulaire débouche dans le volume interne d'une boîte à eau en deux parties assurant la distribution et la récupération de l'eau sous pression circulant dans les tubes et transportant la chaleur d'échauffement et de vaporisation de l'eau d'alimentation. Chacun des tubes du générateur de vapeur cintré à sa partie supérieure présente une extrémité débouchant dans une partie de la boîte à eau et son autre extrémité débouchant dans l'autre partie de cette boîte à eau.

Les tubes du générateur de vapeur constituant un faisceau sont sertis à l'intérieur de trous de diamètre approprié traversant la plaque tubulaire pratiquement sur toute l'épaisseur de cette plaque. Le faisceau de tubes disposé dans la partie du générateur de vapeur délimitée par la face de sortie de la plaque tubulaire est maintenu à l'intérieur de l'enveloppe du générateur de vapeur par des plaques entretoises régulièrement espacées suivant la hauteur du faisceau et présentant un réseau de trous correspondant aux positions transversales des tubes du faisceau.

Pendant le fonctionnement du réacteur, certaines zones des tubes du faisceau sont soumises à une corrosion locale accrue, aussi bien depuis la surface interne du tube en contact avec l'eau sous pression que depuis la surface externe en contact avec l'eau d'alimentation. Cette corrosion accrue est due le plus souvent à une concentration de contraintes résiduelles élevées ou à l'accumulation de produits corrosifs en contact avec la surface extérieure du tube.

En particulier, la zone de transition entre la zone du tube déformée par sertissage à l'intérieur de la plaque tubulaire et la zone du tube non déformée est soumise à une corrosion accélérée due à la concentration des contraintes et à l'accumulation de produits corrosifs sur la face supérieure de sortie de la plaque tubulaire.

Lorsqu'on effectue l'entretien des générateurs de vapeur d'un réacteur nucléaire, ce réacteur étant à l'arrêt, il est nécessaire d'effectuer des contrôles des tubes, en particulier pour déterminer leur tenue à la corrosion dans la zone de transition, après un certain temps de service. Ces contrôles peuvent nécessiter l'extraction d'une portion de tube entourant la zone de transition. Cette extraction n'a d'intérêt que si elle peut être réalisée sans déformation et sans modification de l'état de surface du tube dans la zone à examiner.

On a donc proposé dans le brevet français FR-A-2.591.744 déposé par la Société FRAMATOME, un procédé et un dispositif d'extraction d'un tronçon de tube d'échangeur de chaleur qui permet d'éviter toute déformation ou modification de l'état de surface du tronçon de tube dont on effectue l'extraction. Le tronçon de tube est préalablement séparé du reste du tube par découpage de la paroi du tube dans une zone située à l'extrémité supérieure du tronçon à extraire. On introduit ensuite un manchon à l'intérieur du tube, depuis la face d'entrée de la plaque tubulaire et sur une longueur telle que le manchon recouvre le tube sur toute la traversée de la plaque tubulaire et sur toute la zone qui sera soumise à l'examen après l'extraction du tronçon. On réalise la jonction entre le tube et le manchon dans deux zones situées de part et d'autre de la zone à examiner, grâce à une colle assurant une liaison de grande résistance mécanique introduite entre la surface intérieure du tube et la surface extérieure du manchon. Enfin, on exerce une traction axiale sur le manchon depuis la face de la plaque tubulaire sur laquelle le tube affleure, pour extraire le tronçon de tube de la plaque tubulaire.

Lors de l'extraction, la zone du tube à examiner n'est soumise à aucune contrainte, le manchon assurant un pontage de cette zone dans son ensemble.

La pose du manchon dans le tube est assurée par un dispositif comportant une seringue d'injection de colle qui est engagée et fixée dans le manchon dans une position voulue avant de réaliser l'introduction du manchon dans le tube. Le manchon comporte dans ouvertures pour permettre le passage de la colle, dans les deux zones de collage dont l'écartement correspond à la longueur de la zone du tube à examiner.

Le manchon et la seringue sont introduits dans le tube, par la face d'entrée de la plaque tubulaire, puis mis en place et maintenus dans la position voulue à l'intérieur du tube pendant l'injection de colle. La seringue est ensuite extraite du manchon, avant la prise complète de la colle.

Lorsque la colle est suffisamment durcie, on effectue, grâce à un dispositif approprié, une traction sur le manchon, de façon à extraire le tronçon de tube de la plaque tubulaire.

Les opérations de pose du manchon et d'injection de la colle peuvent être réalisées par un opérateur depuis la boîte à eau du générateur de vapeur.

Le procédé et le dispositif décrits dans le brevet français FR-A-2.591.744 sont parfaitement adaptés au cas du prélèvement d'un tronçon de tube constitué par la partie d'extrémité du tube sertie dans la plaque tubulaire et la partie du tube immédiatement adjacente correspondant à la zone de transition. En effet, dans ce cas, la longueur du manchon n'est que très légèrement supérieure à l'épaisseur de la plaque tubulaire, si bien que le débattement à l'intérieur de la boîte à eau est suffisant pour permettre l'introduction de l'ensemble rigide constitué par le manchon et la seringue dans le tube.

Il peut s'avérer nécessaire d'effectuer le contrôle des tubes par prélèvement d'un tronçon, non seulement dans la zone de transition mais également dans des zones plus éloignées des extrémités du tube et par exemple au niveau de la première plaque entretoise du générateur de vapeur. Dans ce cas, le procédé et le dispositif décrits ne peuvent être utilisés dans la mesure où le manchon d'extraction et la seringue constituant un ensemble rigide présenteraient une longueur importante incompatible avec le débattement possible à l'intérieur de la boîte à eau. Ceci est particulièrement vrai dans le cas des grands cintres, c'est-à-dire des tubes situés le plus à l'extérieur du faisceau, la boîte à eau de forme hémisphérique présentant une faible hauteur à l'aplomb de ces tubes.

On ne connaissait donc pas jusqu'ici de procédé et de dispositif permettant de réaliser l'extraction d'un tronçon de tube de générateur de vapeur dans une zone éloignée des extrémités du tube, par exemple au voisinage d'une plaque entretoise de maintien du faisceau, de manière à préserver l'état du tronçon à extraire et à éviter toute rupture du tube, lors de l'extraction, causée par la fissuration.

Le but de l'invention est donc de proposer un dispositif de pose d'un manchon d'extraction dans un tube de générateur de vapeur fixé par sertissage dans une plaque tubulaire par ses parties d'extrémité, de façon à affleurer sur une première face ou face d'entrée de la plaque tubulaire et à être saillant par rapport à la seconde face, le tronçon de tube à extraire depuis la face d'entrée de la plaque tubulaire, à l'intérieur d'une boîte à eau du générateur de vapeur, étant d'abord séparé de la partie restante du tube par découpage dans une zone éloignée des extrémités du tube et muni intérieurement, sur une partie au moins de sa longueur, d'un manchon d'extraction dont la pose est réalisée par un dispositif comprenant une seringue d'injection de colle engagée et fixée dans le manchon d'extraction pour injecter une colle entre le manchon et le tube dans au moins deux zones, ce dispositif permettant de réaliser, depuis la boîte à eau du générateur de vapeur, la pose d'un manchon d'extraction dans une zone du tube éloignée de ses extrémités et par exemple située au niveau d'une plaque entretoise du générateur de vapeur.

Dans ce but, le dispositif de pose suivant l'invention comporte de plus :

- au moins une manchette de guidage munie à l'une de ses extrémités de moyens de liaison à des moyens correspondants disposés à une première extrémité du manchon d'extraction,

– une manchette de maintien munie à l'une de ses extrémités de moyens de liaison amovibles à des moyens correspondants disposés à la seconde extrémité du manchon d'extraction,

– des moyens de fixation de la manchette de maintien sur la face d'entrée de la plaque tubulaire,

– et des moyens de mise en place du manchon d'extraction et de mise en place, de commande et d'extraction de la seringue d'injection comportant un organe de manoeuvre et un élément de transmission allongé dont le diamètre est inférieur au diamètre intérieur de la manchette de maintien, relié à l'une de ses extrémités à la seringue d'injection et à son autre extrémité à l'organe de manoeuvre.

L'invention est également relative à un procédé d'extraction d'un tronçon de tube de générateur de vapeur éloigné des extrémités du tube mettant en oeuvre le dispositif de pose suivant l'invention.

Afin de bien faire comprendre l'invention, on va maintenant décrire, à titre d'exemple non limitatif, en se référant aux figures jointes en annexe, un mode de réalisation du dispositif de pose et un exemple de réalisation du procédé d'extraction, suivant l'invention.

La figure 1 est une vue en élévation avec coupe partielle d'un générateur de vapeur d'un réacteur à eau sous pression, avant l'extraction d'un tronçon de tube, situé au voisinage de la première entretoise du générateur de vapeur.

La figure 2 est une vue d'ensemble de la seringue d'injection et de ses moyens de commande.

La figure 3 est une vue en coupe axiale de l'organe de manoeuvre de la seringue d'injection.

La figure 4 est une vue en coupe axiale de l'extrémité de l'élément de transmission reliée à la seringue d'injection et opposée à l'organe de manoeuvre.

La figure 5 est une vue en coupe axiale de la seringue d'injection.

La figure 6 est une vue en élévation de la manchette de guidage du dispositif de pose.

La figure 6A est une vue suivant 6A-6A de la figure 6.

La figure 7 est une vue en élévation du manchon d'extraction en position à l'intérieur d'un tube du générateur de vapeur.

La figure 8 est une vue en coupe à plus grande échelle du détail 8 de la figure 7.

La figure 9 est une vue en coupe axiale du manchon d'extraction.

La figure 10 est une vue suivant 10-10 de la figure 9.

La figure 11 est une vue suivant 11-11 de la figure 9.

La figure 12 est une vue en perspective des moyens de liaison de la partie d'extrémité inférieure du manchon d'extraction.

La figure 13 est une vue en élévation de la manchette de maintien du dispositif d'extraction.

La figure 14 est une vue à plus grande échelle des moyens de liaison de la partie supérieure de la manchette représentée sur la figure 13.

La figure 15 est une vue en coupe suivant 15-15 de la figure 14.

La figure 16 est une vue en perspective des moyens de liaison disposés à l'extrémité supérieure de la manchette représentée sur la figure 13.

La figure 17 est une vue en coupe d'un manchon souple de protection de l'extrémité de la manchette de maintien.

La figure 18 est une vue en coupe d'un manchon souple de protection de l'extrémité inférieure du manchon d'extraction.

La figure 19 est une vue de dessus d'une platine de fixation de la manchette de maintien sur la plaque tubulaire.

La figure 19A est une vue en élévation avec coupe partielle d'un élément de bridage de la platine représentée sur la figure 19.

La figure 20 est une vue en coupe d'un manchon de fixation de la manchette de maintien.

La figure 21 est une vue en élévation d'un manchon d'extraction d'un tronçon de tube au niveau de la première plaque entretoise du générateur de vapeur, avec indication des différentes zones prévues sur ce manchon.

Les figures 22A, 22B, 22C, 22D et 22E sont des vues schématiques montrant les différentes phases relatives à la pose d'un manchon d'extraction dans un tube de générateur de vapeur, en utilisant le dispositif suivant l'invention.

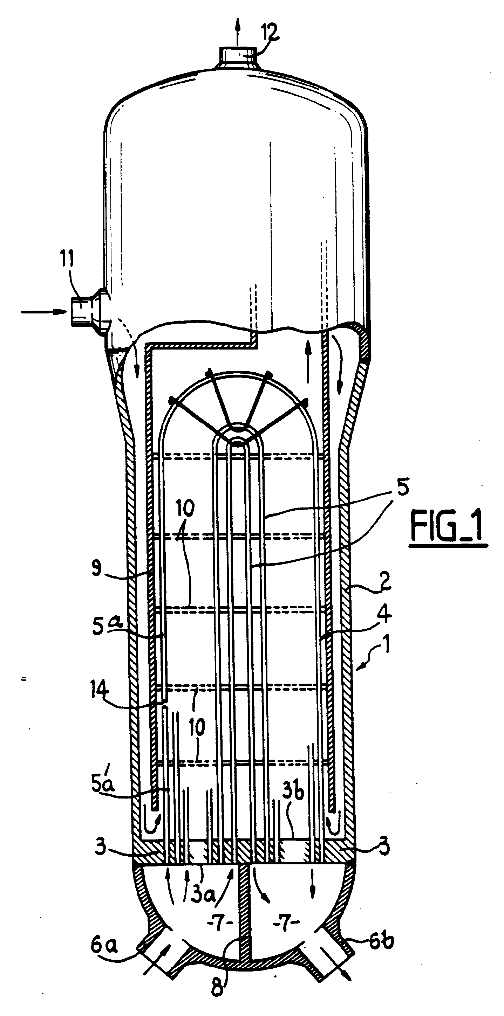

Sur la figure 1, on voit un générateur de vapeur d'un réacteur nucléaire à eau sous pression désigné de manière générale par le repère 1. Le générateur de vapeur comporte une enveloppe 2 de forme globalement cylindrique disposée avec son axe vertical et solidaire, à sa partie inférieure, d'une plaque tubulaire de forte épaisseur 3. Le générateur de vapeur comporte un faisceau 4 constitué par des tubes pliés en forme de U dont les extrémités sont fixées dans la plaque tubulaire 3. Les tubes 5 du faisceau affleurent sur une première face 3a de la plaque tubulaire 3 constituant sa face d'entrée et sont saillants par rapport à l'autre face 3b constituant la face de sortie.

Une boîte à eau 7 en deux parties séparées par une cloison 8 est disposée sous la plaque tubulaire 3, du côté de sa face d'entrée 3a. La boîte à eau 7 comporte d'un côté de la cloison 8 une tubulure 6a d'arrivée d'eau primaire sous pression dans la boîte à eau et de l'autre côté de la cloison 8, une tubulure 6b de sortie de l'eau primaire ayant circulé dans les tubes 5 du faisceau. Chacun des tubes du faisceau comporte une extrémité débouchant dans la première partie de la boîte à eau et son autre extrémité débouchant dans la seconde partie de la boîte à eau.

Le faisceau 4 est disposé à l'intérieur d'une enveloppe de faisceau 9 et maintenu par des entretoises 10 régulièrement espacées suivant la hauteur du faisceau. De l'eau d'alimentation pénètre dans l'enveloppe externe 2 du générateur de vapeur par une tubulure 11 puis circule de haut en bas dans l'espace annulaire réservé entre 1 enveloppe de faisceau 9 et l'enveloppe externe 2. L'eau d'alimentation parvient à la base du faisceau où elle pénètre à l'intérieur de l'enveloppe de faisceau 9 pour circuler dans la direction verticale et de bas en haut au contact des tubes du faisceau 4. L'eau d'alimentation est échauffée puis vaporisée par l'eau primaire sous pression circulant dans les tubes 5 du faisceau, pendant sa circulation ascendante. La vapeur formée est séchée dans la partie supérieure du générateur de vapeur puis récupérée dans un circuit de vapeur, au niveau de la tubulure 12.

Sur la figure 1, on a représenté le générateur de vapeur pendant une phase d'arrêt et d'entre tien au cours de laquelle on effectue l'extraction d'un tronçon 5'a d'un tube 5a du faisceau, le tronçon 5'a ayant son extrémité supérieure située entre les deux premières plaques entretoises 10.

Une telle extraction permet en particulier d'effectuer l'examen de la zone du tube 5a située, en service, au niveau de la première entretoise 10 au-dessus de la plaque tubulaire 3.

Cette opération d'extraction du tronçon 5'a de grande longueur peut être effectuée sans que la zone du tube à examiner, au voisinage de la première plaque entretoise 10, soit déformée ou détériorée pendant l'extraction. Dans ce but, on réalise la pose d'un manchon d'extraction fixé par collage à l'intérieur du tronçon de tube 5'a, dans sa zone voisine de la plaque tubulaire 10, en utilisant un dispositif de pose suivant l'invention qui sera décrit plus loin.

Préalablement à la pose du manchon d'extraction, on réalise une coupe de la paroi du tube, dans une zone 14 située entre la première et la seconde entretoise. Cette opération de coupe est réalisée grâce à un dispositif de coupe rotatif introduit à l'intérieur du tube 5a, par la boîte à eau du générateur de vapeur.

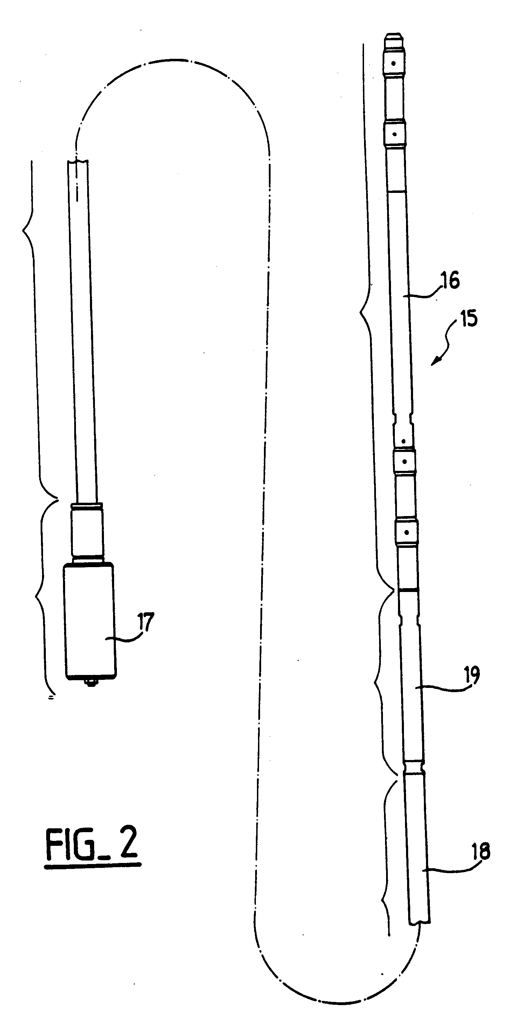

Le dispositif de pose d'un manchon d'extraction suivant l'invention comporte un ensemble d'injection commandé à distance qui est visible sur la figure 2. Cet ensemble d'injection désigné de manière générale par le repère 15 comporte une seringue 16, un organe de manoeuvre manuel 17, un élément de transmission allongé et souple 18 ainsi qu'un moyen de verrouillage 19 de la seringue 16 à l'intérieur d'un manchon d'extraction.

L'élément de transmission souple 18 dont la longueur peut être de l'ordre de cinq mètres permet de commander les opérations de mise en place et de collage du manchon d'extraction, depuis l'extérieur de la boîte à eau.

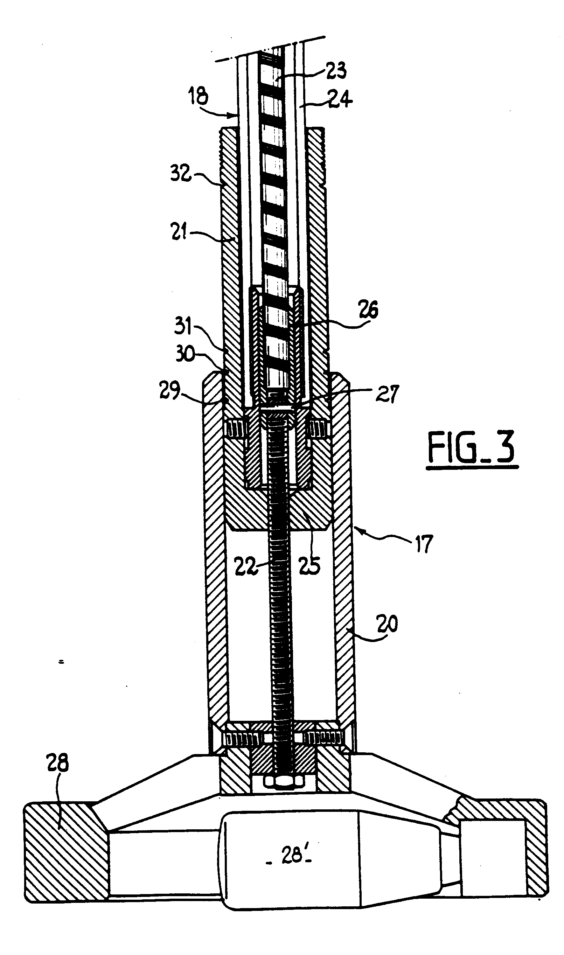

Sur la figure 3, on voit l'organe de manoeuvre 17 de l'ensemble d'injection relié à l'élément de transmission 18 et permettant de réaliser à distance la mise en place du manchon d'extraction et la commande de la seringue d'injection de colle.

Cet organe de manoeuvre comporte une douille montée rotative sur un embout 21 et solidaire d'une vis de commande 22 placée suivant l'axe de la douille 20. Sur l'extrémité de la douille 20, est fixé un volant 28 muni d'une poignée de manoeuvre 28' permettant de faire tourner la douille 20 sur l'embout 21.

L'élément de transmission 18 allongé est constitué par un flexible 23 monté à l'intérieur d'une gaine 24, suivant l'axe de cette gaine et avec un jeu important.

L'extrémité de la gaine tubulaire 24 est solidaire de l'embout 21 qui comporte un fond 25 traversé par un trou taraudé dans lequel est engagée la vis de manoeuvre 22.

L'extrémité de la vis de manoeuvre 22 est rendue solidaire de l'extrémité du flexible 23 par l'intermédiaire d'un manchon 26 dans lequel est sertie l'extrémité du flexible 23 et d'une goupille 27 traversant radialement le manchon 26 et la vis 22.

Lorsqu'on fait tourner la douille 20 autour de son axe sur l'embout 21, la vis 22 engagée dans le trou taraudé du fond 25 de la douille 21 se déplace dans un mouvement de translation axiale en entraînant le flexible 23 mobile à l'intérieur de la gaine 24.

La douille 20 se déplace simultanément par rapport au manchon 21 et la position de la douille 20 par rapport au manchon 21 peut être repérée grâce à des encoches 29, 30, 31 et 32.

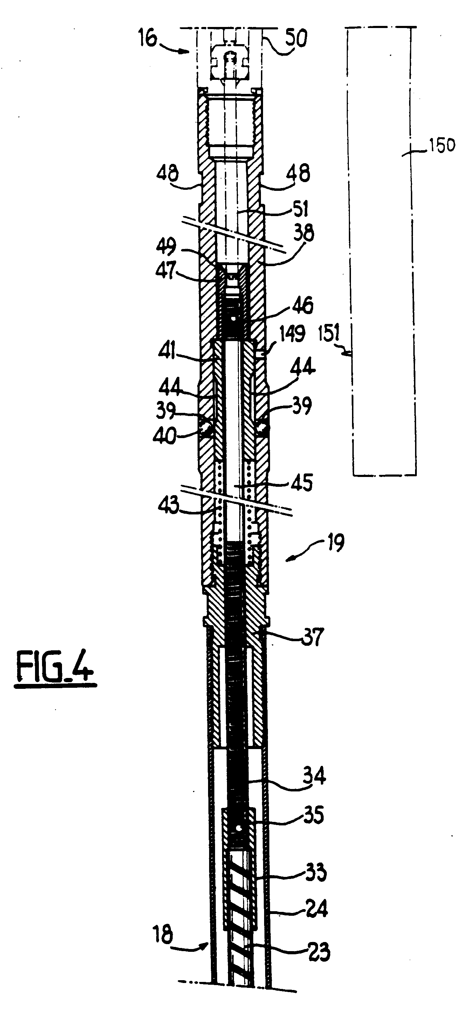

Les déplacements de la douille de commande 20 sont transmis par le flexible 23 de l'élément de transmission 18, suivant toute la longueur de cet élément qui est relié, comme il est visible sur la figure 4, à son extrémité opposée à la douille de manoeuvre 20, au moyen de verrouillage 19 de la seringue d'injection 16.

L'extrémité du flexible 23 est reliée, par l'intermédiaire d'un manchon 33, à l'extrémité d'une vis 34 dont la fixation est assurée par une goupille 35. La vis 34 est engagée dans un écrou 37 solidaire de l'extrémité de la gaine 24 de l'élément de transmission 18.

L'écrou 37 assure de plus la liaison entre l'élément de transmission 18 et une douille 38 constituant le corps du verrou 19. La douille 38 comporte deux ouvertures radiales 39 diamétralement opposées dans chacune desquelles est sertie une bille 40. Une douille 41 constituant la partie mobile du verrou 19 est montée coulissante dans l'alésage de la douille 38 dans laquelle elle est rappelée en position haute en butée sur un épaulement, par un ressort hélicoïdal 43. La douille coulissante 41 comporte deux saignées axiales 44 opposées diamétralement dans des positions correspondantes à celles des ouvertures radiales 39 et des billes 40 du verrou.

La position de la douille coulissante 41 représentée sur la figure 4 correspond au verrouillage de la seringue obtenu lorsque la poignée est dans sa position représentée sur la figure 3, son extrémité supérieure étant au niveau de l'encoche 30. Dans cette position, les billes 40 sont repoussées vers l'extérieur par la surface latérale de la douille 41 et se trouvent légèrement saillantes dans la direction radiale par rapport à la surface extérieure de la douille 38.

Il sera expliqué plus loin que le manchon d'extraction comporte des ouvertures dans lesquelles viennent s'engager les billes 40, pour réaliser le blocage de la seringue 16 dont le corps est fixé à la partie d'extrémité de la douille 38, à l'intérieur du manchon d'extraction.

La vis 34 est prolongée à sa partie supérieure audelà de l'écrou 37, par une tige lisse 45 traversant axialement l'alésage de la douille 41 et reliée par une partie filetée et par une goupille 46, à une douille de commande 47 montée coulissante dans l'alésage de la douille 38 et susceptible de venir en appui, comme représenté sur la figure 4, sur l'extrémité supérieure de la douille 41.

A partir de la position de verrouillage où la douille de commande 47 est en appui sur la douille de verrouillage 41, on peut passer à une position de déverrouillage en actionnant la poignée de manoeuvre dans le sens du dévissage, pour passer de la position indiquée par le repère 30 à la position indiquée par le repère 29.

Ce déplacement de la poignée de manoeuvre entraîne, par l'intermédiaire du flexible 23, de la vis 34 et de la tige lisse 45, un déplacement vers le bas de la douille de commande 47 entraînant un déplacement correspondant de la douille 41. Les billes 40 viennent en coïncidence avec les saignées axiales 44, ce qui leur permet un certain dégagement radial à l'intérieur des cavités 39 et donc le déverrouillage.

Lorsque la poignée de manoeuvre est actionnée dans le sens du vissage à partir de la position repérée par l'encoche 29, la douille de commande 47 est déplacée vers le haut, par l'intermédiaire du flexible 23 de la vis 34 et de la tige lisse 45. Simultanément, la douille de verrouillage 41 rappelée vers le haut par le ressort 43 accompagne la douille 47 et présente sa partie pleine en-dessous des saignées 44 en face des billes 40, lorsque la poignée atteint la position de verrouillage. Le dispositif est alors revenu dans sa position représentée sur les figures 3 et 4.

La douille 38 constituant le corps du verrou comporte deux plats 48 dans des positions diamétralement opposées qui permettent de bloquer en rotation le verrou 19, lorsqu'on vient visser l'extrémité du corps de la seringue d'injection 16 sur l'extrémité du verrou 19.

La douille de commande 47 comporte, à sa partie supérieure opposée à sa partie reliée à la tige 45, un alésage cylindrique 49 terminé par une partie tronconique évasée ouverte vers le haut.

La partie d'extrémité de la tige 51 de la seringue montée coulissante dans le corps de seringue vient s'engager dans l'alésage 49 de la douille 47, lorsque le dispositif est en position de verrouillage, comme représenté sur la figure 4. En déplaçant la poignée de manoeuvre 20 dans le sens du vissage, on vient mettre en appui, à partir de la position repérée 31, l'extrémité de la tige 51 avec le fond de l'alésage 49. La position 31 correspond au début d'injection, c'est-à-dire au début du déplacement de la tige 51 en translation axiale dans le corps 50.

La douille 47 entraîne un déplacement en translation axiale de la tige 51, par simple appui dans le fond de l'alésage 49 de l'extrémité de la tige 51. L'extrémité de la tige 51 est montée à frottement doux dans l'alésage 49, si bien que la rotation de la tige 45 et de la douille 47 n'est pas transmise à la tige 51.

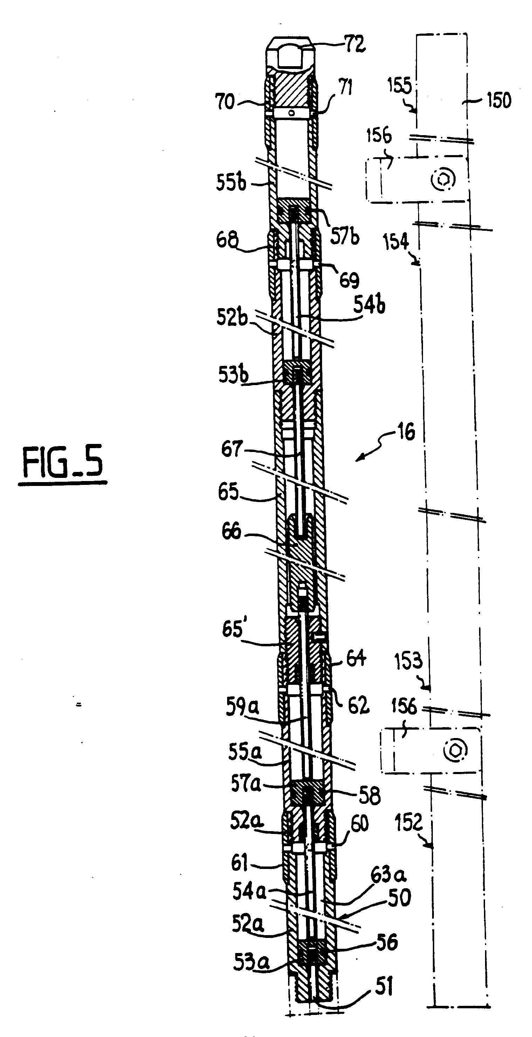

Sur la figure 5, on voit l'ensemble de la seringue d'injection 16 du dispositif de pose suivant l'invention dont le corps 50 et la tige 51 sont constitués de tronçons successifs qui peuvent être assemblés au moment du remplissage et du montage de la seringue.

La seringue 16 comporte un ensemble inférieur d'injection de pâte d'étanchéité, un ensemble inférieur d'injection de colle, un ensemble supérieur d'injection de pâte d'étanchéité et un ensemble supérieur d'injection de colle.

Chacun des ensembles d'injection comporte un cylindre dans lequel se déplace un piston muni de joints d'étanchéité.

Les cylindres successifs des différents ensembles ainsi que des pièces tubulaires de liaison constituent le corps de la seringue, cependant que les différentes tiges de liaison des pistons constituent la tige de la seringue 51 à déplacement axial.

L'ensemble inférieur d'injection de pâte d'étanchéité comporte un cylindre 52a dans lequel est monté un piston 53a muni d'un joint d'étanchéité 56 et relié d'une part à la partie de la tige 51 venant en appui dans l'alésage 49 de la douille 47 et d'autre part à une tige de liaison 54a constituant une partie de la tige 51 de la seringue.

L'ensemble inférieur d'injection de colle comporte un cylindre 55a dans lequel est monté un piston 57a muni d'un joint d'étanchéité 58. Le piston 57a est relié d'une part à l'extrémité de la tige 54a et d'autre part à une tige de liaison 59a.

La partie inférieure du cylindre 55a constitue un palier de guidage de la tige 54a. Le cylindre 55a est vissé sur une partie taraudée du cylindre 52a. Un manchon 61 en matière plastique comportant des ouvertures 60 de passage de pâte d'étanchéité est disposé autour de la zone de jonction entre les cylindres 52a et 55a de manière que les ouvertures 60 communiquent avec la chambre 63a du cylindre 52a contenant une pâte d'étanchéité pouvant être injectée lors du déplacement vers le haut du piston 53a.

Le cylindre 55a est vissé, à son extrémité opposée au cylindre 52a, sur une pièce 65' constituant un palier de glissement, elle-même reliée par une vis radiale à la partie inférieure d'une pièce de liaison tubulaire 65.

La tige 59a est montée glissante dans le palier 65' et se trouve reliée, à son extrémité opposée au piston 57a, à une pièce de liaison 66 sur laquelle est fixée une tige 67 de liaison au piston 53b de l'ensemble supérieur d'injection de pâte d'étanchéité.

Un manchon 64 en matière plastique comportant des ouvertures 62 de passage de colle est disposé autour de la partie supérieure du cylindre 55a de manière que les ouvertures 62 communiquent avec la chambre du cylindre 55a contenant une colle pouvant être injectée lors du déplacement du piston 57a.

L'ensemble supérieur d'injection de pâte d'étanchéité comporte un cylindre 52b et une tige de piston 54b reliée au piston 53b.

Le cylindre 52b est vissé, sur le cylindre 55b de l'ensemble supérieur d'injection de colle. Un manchon 68 comportant des trous de passage de pâte d'étanchéité 69 est fixé autour de la zone de jonction entre les cylindres 52b et 55b. Cet ensemble supérieur d'injection de colle comporte en outre un piston 57b relié à l'extrémité de la tige 54b. La partie inférieure du cylindre 55b constitue un palier de glissement pour la tige 54b.

Autour de la partie supérieure du cylindre 55b, est monté un manchon 70 comportant des ouvertures de passage de colle 71. L'extrémité supérieure du cylindre 55b est fermée par un bouchon 72 de forme profilée permettant de réaliser la fermeture étanche du cylindre 55b, par vissage. Le bouchon 72 permet également d'engager un outil de serrage sur la seringue pour réaliser sa fixation par vissage dans la partie supérieure filetée de la douille 38 du verrou 19.

Le remplissage des cylindres par de la pâte d'étanchéité et par de la colle est effectué au moment du montage de la seringue d'injection, les différentes pièces constituant le corps 50 et la tige 51 de cette seringue étant assemblées après remplissage, les pistons étant dans leur position basse, comme représenté sur la figure 5.

On réalise le montage des ensembles inférieurs d'injection et des ensembles supérieurs séparément, ces ensembles étant ensuite assemblés entre eux.

L'ensemble de la seringue est ensuite vissé sur la partie supérieure du verrou et maintenu dans une position verticale.

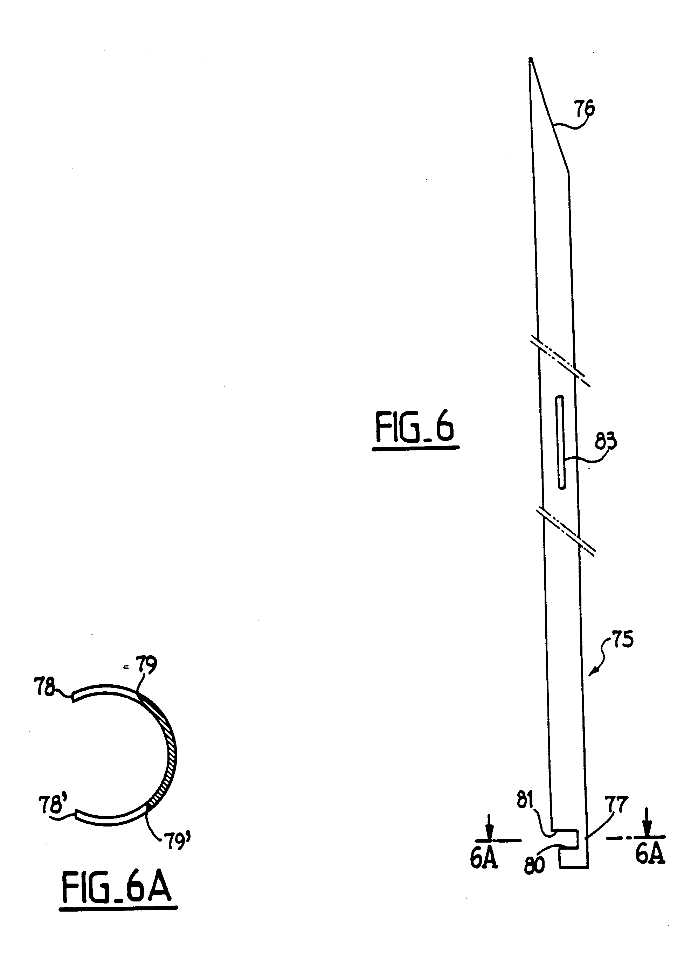

Sur les figures 6 et 6a, on voit la manchette supérieure de guidage du dispositif de pose suivant l'invention. Cette manchette de guidage 75 est constituée par un simple tube présentant, à sa partie supérieure, une partie en biseau 76 faisant un angle de 30° avec l'axe de la manchette 75 et, à son extrémité inférieure, un profil d'accrochage 77 destiné à assurer la liaison de la manchette de guidage 75 avec le manchon d'extraction.

Comme il est visible sur la figure 6a, pour réaliser le profil d'accrochage 77, la manchette 75 est découpée à son extrémité suivant quatre génératrices 78, 78′, 79 et 79′ ainsi que suivant deux sections transversales 80 et 81 respectivement en forme de secteur et en forme d'arc-de-cercle.

La manchette de guidage 75 comporte de plus, dans une zone médiane, une lumière 83 permettant de visualiser la coupe 14 du tube à extraire, grâce à une caméra miniaturisée introduite par l'extrémité du tube opposée à l'extrémité par laquelle on effectue l'extraction.

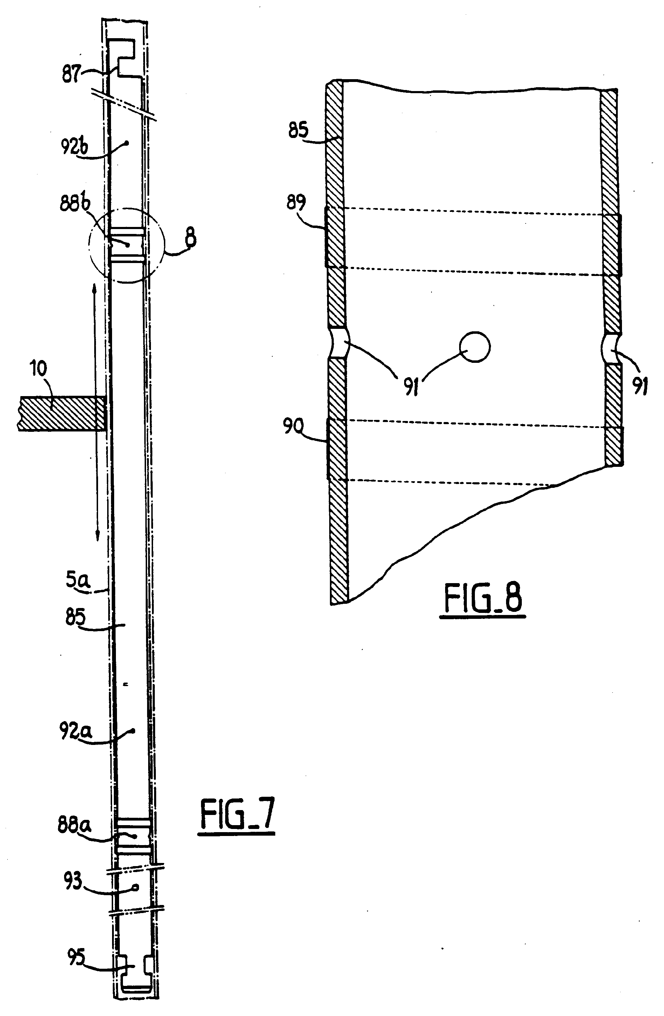

Sur les figures 7 et 8, on voit un manchon d'extraction 85 dans la position qu'il occupe à l'intérieur d'un tronçon de tube 5a, au voisinage de la première entretoise 10 du générateur de vapeur, au moment de l'extraction.

Le manchon d'extraction 85 est constitué par un tube dont le diamètre est identique au tube de la manchette supérieure de guidage 75. Ce diamètre est légèrement inférieur au diamètre intérieur du tube 5a du générateur de vapeur.

Le manchon 85 comporte à sa partie supérieure un profil de liaison 87 complémentaire du profil 77 découpé à la partie inférieure de la manchette 75. Les profils 77 et 87 peuvent être engagés à l'intérieur l'un de l'autre, avant leur introduction dans le tube du générateur de vapeur.

Lorsque l'introduction de la manchette de guidage et du manchon d'extraction dans le tube 5 est réalisée, la manchette 75 et le manchon 85 sont solidaires en translation axiale et ne peuvent plus être séparés, leur séparation exigeant un dégagement radial suffisant.

Le manchon d'extraction 85 comporte deux zones d'injection de pâte d'étanchéité 88a et 88b qui ont été représentées à grande échelle sur la figure 8. Chacune des zones 88a ou 88b est délimitée par deux anneaux d'étanchéité 89 et 90 constitués chacun par un dépôt annulaire de chrome dur sur la surface extérieure du manchon 85. Entre les anneaux 89 et 90, la paroi du manchon 85 est percée de quatre ouvertures 91 disposées à 90° les unes des autres autour de l'axe du manchon 85.

L'épaisseur des anneaux de chrome dur 89 et 90 correspond sensiblement au jeu existant entre la surface intérieure du tube 5 et la surface extérieure du manchon 85.

Lorsque le manchon 85 est mis en place dans un tube 5 comme représenté sur la figure 7, les anneaux 89 et 90 assurent une fermeture presque complète de l'espace annulaire situé au-dessus du manchon 85 dans la zone 88a ou 88b.

Le manchon d'extraction 85 comporte de plus deux jeux 92a et 92b de deux trous diamétralement opposés traversant la paroi du manchon 85, au-dessus de la zone 88a et au-dessus de la zone 88b respectivement.

La zone du tube à protéger pendant l'extraction se trouve approximativement située entre les trous 92a et la zone 88b, de part et d'autre de la plaque entretoise 10.

Le manchon 85 comporte également deux trous 93 traversant sa paroi dans des positions diamétralement opposées, en-dessous de la zone 88a.

Enfin, l'extrémité inférieure du manchon 85 opposée au profil de liaison 87 comporte un dispositif de liaison 95 dont la structure sera décrite ci-dessous.

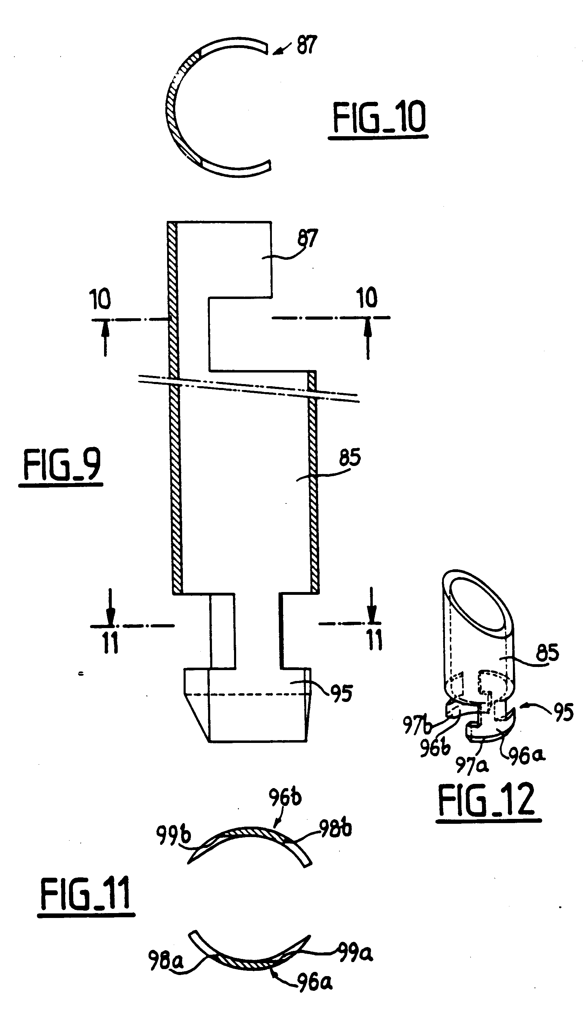

Sur les figures 9, 10, 11 et 12, on voit les parties d'extrémité du manchon 85, la partie d'extrémité supérieure 87, comme il est visible sur les figures 9 et 10, comportant une découpe constituant un profil d'accrochage complémentaire du profil 77 de la manchette de guidage 75.

Le dispositif de liaison 95 qui est visible sur la partie inférieure de la figure 9 et sur les figures 11 et 12 comporte deux doigts d'accrochage en T 96a et 96b comportant chacun, à leur partie inférieure, une surface d'engagement inclinée 97a (ou 97b) un bord latéral de direction radiale 98a (ou 98b) et un bord latéral en biseau 99a (ou 99b).

Les bords en vis-à-vis 99a et 98b (ou 98a et 99b) des deux doigts sont de types différents.

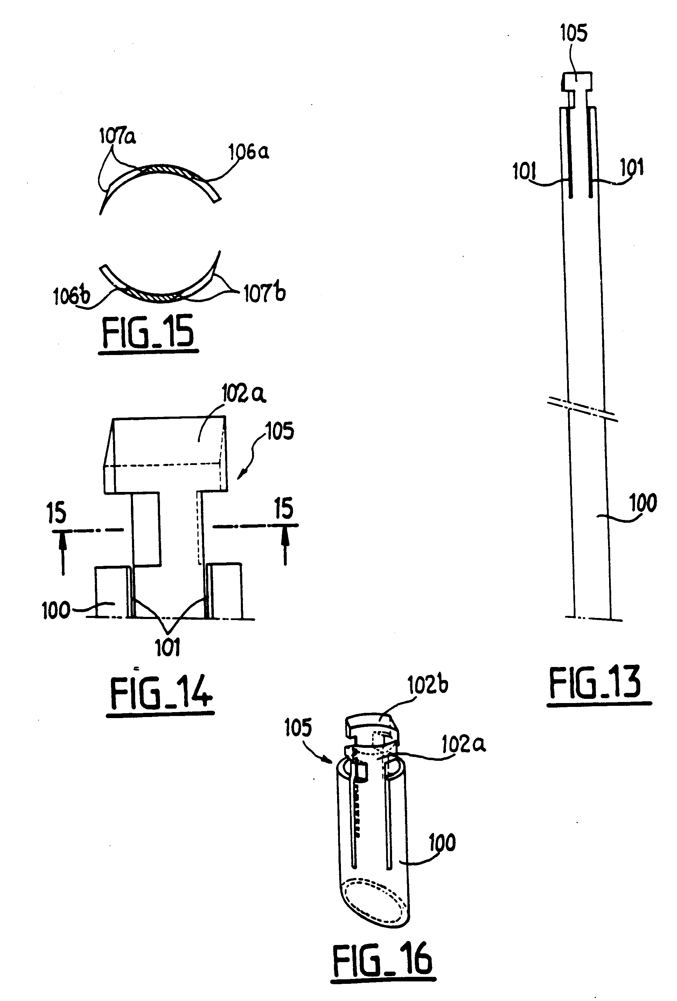

Sur les figures 13, 14, 15 et 16, on voit la partie supérieure de la manchette inférieure de maintien 100 du dispositif de pose comportant un moyen de liaison complémentaire du moyen 95 situé à la partie inférieure du manchon d'extraction 85.

La manchette inférieure de maintien 100 est constituée par un tube dont le diamètre est identique au diamètre du tube du manchon d'extraction.

La partie supérieure de la manchette 100 comporte quatre fentes 101 disposées suivant des génératrices de la manchette 100 et délimitant deux secteurs cylindriques dans la paroi de la manchette 100 à chacun desquels est relié un doigt d'accrochage en T 102a ou 102b d'un dispositif de liaison 105 destiné à coopérer avec le dispositif 95 du manchon d'extraction pour réaliser la liaison de ces deux pièces tubulaires.

Les doigts d'accrochage en forme de T 102a et 102b sont limités à leur partie d'extrémité par des biseaux et comportent latéralement chacun une partie d'attaque 106a ou 106b de direction radiale et une partie d'attaque 107a ou 107b en biseau.

La manchette de maintien 100 peut être assemblée au manchon d'extraction 85 en engageant les doigts d'accrochage 102a et 102b du dispositif 105 entre les doigts 96a et 96b du dispositif 95, grâce à l'élasticité procurée par les fentes 101.

Les doigts en T viennent se glisser à l'intérieur des logements de forme correspondante ménagés entre les doigts en T du dispositif de liaison correspondant.

L'assemblage est tel que les parties d'appui radiales 98a et 98b situées sur la branche principale et sur la branche secondaire des doigts du premier dispositif viennent en vis-à-vis des parties radiales 106a et 106b des branches correspondantes des T du second dispositif de liaison 105.

De même, les parties en biseau 99a et 99b viennent en vis-à-vis des parties en biseau correspondantes 107a et 107b.

Il est bien évident qu'en faisant tourner une manchette par rapport à l'autre dans un premier sens, on vient mettre en contact les parties radiales, les manchettes étant solidaires en rotation autour de leur axe, dans ce premier sens de rotation.

Dans l'autre sens, les parties en biseau viennent en contact les unes avec les autres et les doigts s'effacent de façon à libérer la jonction entre la manchette 100 et le manchon 85.

Le manchon 85 et la manchette 100 sont solidaires l'un de l'autre en translation axiale, lorsqu'ils sont assemblés.

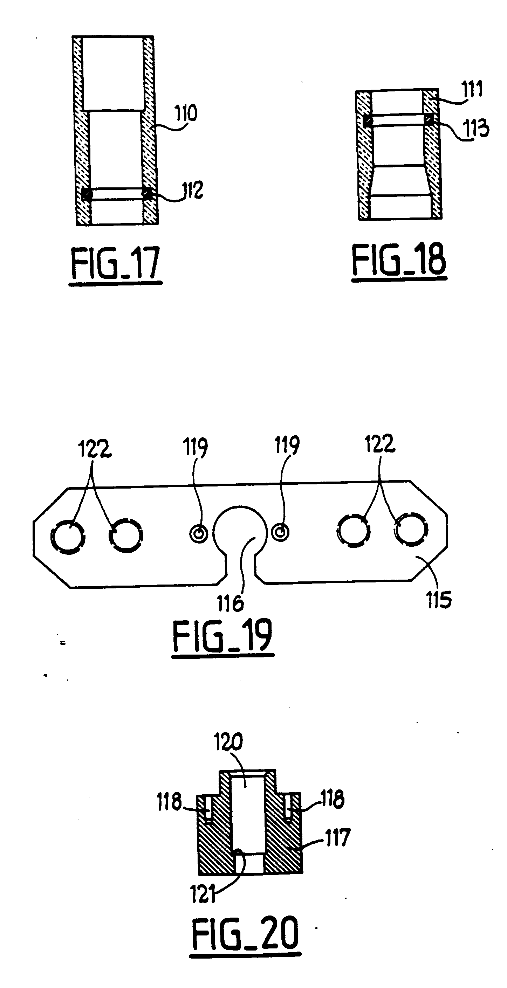

Sur les figures 17 et 18, on a représenté, respectivement un manchon 110 et un manchon 111 en Plexiglas destinés à venir s'engager sur la partie supérieure de la manchette de maintien 100 comportant le dispositif de liaison 105 et sur la partie inférieure du manchon d'extraction 85 comportant le dispositif de liaison 95.

Les manchons 110 et 111 comportent, dans leur partie recevant respectivement l'extrémité supérieure de la manchette de maintien et l'extrémité inférieure du manchon d'extraction, des joints toriques 112 et 113.

Ces dispositifs sont utilisés, comme il sera décrit plus loin, en particulier pour protéger les dispositifs de liaison 95 et 105 qui pourraient être facilement déformés et détériorés, au moment du montage du dispositif de pose sur la plaque tubulaire, si bien que le fonctionnement de ces dispositifs de liaison pour l'assemblage ou le démontage des manchettes risquerait d'être défectueux.

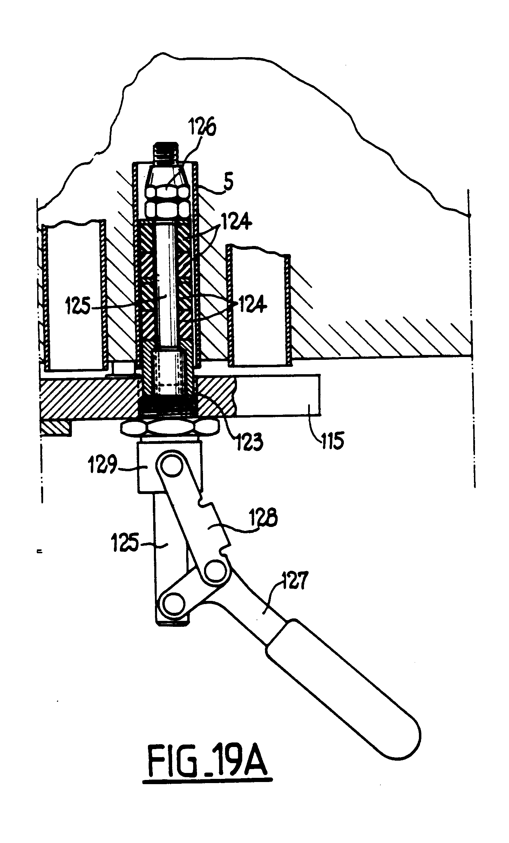

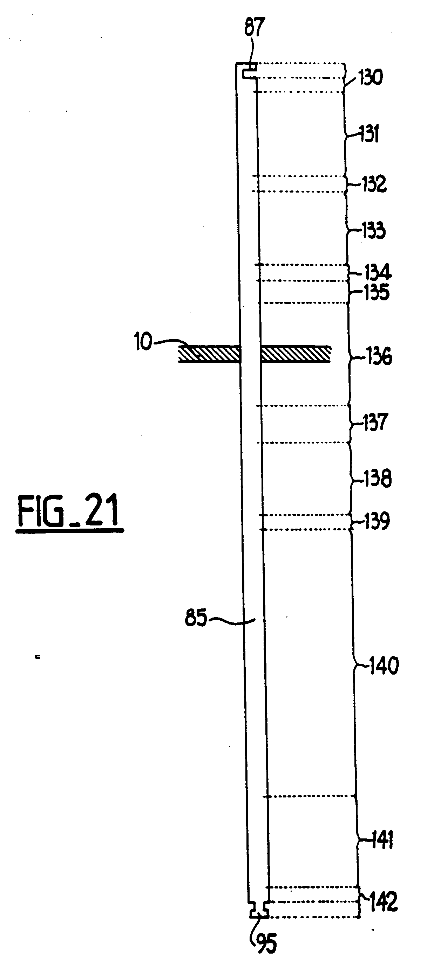

Sur les figures 19 et 20, on voit les éléments permettant de fixer la manchette de maintien du dispositif de pose, pendant le collage du manchon d'extraction.

Ces éléments comportent une platine 115 comportant une ouverture centrale 116 dans laquelle peut être monté un manchon 117 représenté sur la figure 20.

Le manchon 117 comporte des trous 118 destinés à recevoir des vis de fixation 119 sur la platine 115.

Un alésage central 120 traverse le manchon 117 sur une partie de sa longueur et se termine par un épaulement 121. Le diamètre de l'alésage 120 est légèrement supérieur au diamètre de la manchette de maintien 100 qui peut être engagée dans l'alésage 120 pour venir reposer sur l'épaulement 121.

La platine 115 comporte de plus quatre trous traversants 122 dont l'écartement correspond à l'écartement des trous de passage des tubes d'un générateur de vapeur, à travers la plaque tubulaire.

L'extrémité de la manchette de maintien 100 peut être engagée dans l'alésage 120 et la platine 115 fixée sous la plaque tubulaire, grâce à des dispositifs de bridage élastiques de type connu tels que représentés sur la figure 19A. De tels dispositifs de bridage comportent un empilement de rondelles élastiques 124 au travers desquelles passe une tige d'actionnement 125 ayant une partie filetée recevant des écrous de serrage 126.

A l'extrémité de la tige 125 opposée aux écrous 126 est articulé un levier 127 qui est relié par une biellette 128 à un corps 129 dans lequel la tige 125 est montée coulissante. Le corps 129 peut venir en appui sur la face inférieure de la platine 115, autour d'une ouverture 122 dans laquelle on engage la tige 125 et les rondelles élastiques 124. Les ouvertures 122 sont mis en coïncidence avec les extrémités d'entrée de tube du générateur de vapeur, de manière à introduire les rondelles élastiques dans les tubes 5 correspondants.

La fixation de la platine 115 par rapport à la plaque tubulaire est assurée en rabattant le levier 127 vers la platine 115, ce qui exerce une traction sur la tige 125 et une dilatation des rondelles élastiques 124 à l'intérieur du tube 5 et donc une fixation de la platine 115 sur la face d'entrée 3a de la plaque tubulaire 3.

Sur la figure 21, on a représenté un manchon d'extraction 85 de manière schématique, pour montrer les différentes zones fonctionnelles de ce manchon, suivant sa longueur.

Le manchon 85 a été représenté dans la position qu'il occupe à l'intérieur d'un tube d'un générateur de vapeur dont on veut réaliser l'extraction d'un tronçon au voisinage de la première entretoise 10.

Les parties d'extrémité du manchon 85 sont constituées par les dispositifs de liaison 87 et 95 qui ont été décrits plus haut.

Entre ces dispositifs 87 et 95, le manchon d'extraction 85 comporte successivement une première zone de garde 130, une zone d'expansion hydraulique 131, une zone libre 132, une zone de collage 133, une zone d'étanchéité 134, une seconde zone libre 135, une zone 136 de protection correspondant à la zone du tube à préserver lors de l'extraction, une troisième zone libre 137, une seconde zone de collage 138, une seconde zone d'étanchéité 139, une quatrième zone libre 140, une seconde zone d'expansion hydraulique 141 et une deuxième zone de garde 142.

Les zones d'expansion hydraulique sont ménagées de manière à réaliser la fixation du manchon d'expansion dans le tube, dans le cas où l'extraction n'a pu être effectuée.

La position des zones de collage et d'étanchéité est déterminée par la position de la seringue d'injection, lorsque celle-ci est introduite dans le manchon d'extraction 85. Cette position est déterminée de manière très précise, grâce au dispositif de verrouillage dont les billes 40 dans leur position saillante de verrouillage viennent se loger dans les trous 93 du manchon 85. Ce verrouillage réalise également l'orientation de la seringue d'injection 16 par rapport au manchon 85, de manière que les trous d'injection de pâte d'étanchéité et de colle soient alignés avec les trous 91 et avec les trous 92a et 92b, respectivement.

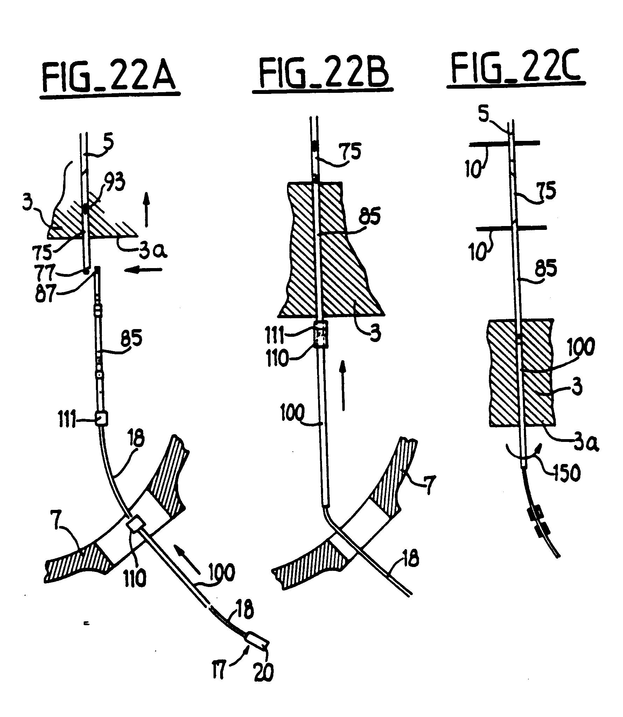

On va maintenant décrire, en se référant à l'ensemble des figures 22A à 22E, une opération de pose d'un manchon d'extraction en utilisant le dispositif suivant l'invention ainsi qu'une opération d'extraction d'un tronçon de tube au voisinage de la première plaque entretoise d'un générateur de vapeur.

Dans un premier temps, on réalise des essais de montage et de démontage de l'ensemble des manchettes, du manchon d'extraction et de la seringue d'injection, à l'extérieur du générateur de vapeur, en utilisant un tube d'essai dont le diamètre intérieur est identique au diamètre intérieur d'un tube 5 du faisceau du générateur de vapeur.

On vérifie tout d'abord que l'emboîtement du dispositif de liaison 77 de la manchette de guidage 75 avec le dispositif correspondant 87 du manchon d'extraction peut être effectué sans difficulté.

On vérifie ensuite que l'emboîtement du dispositif de liaison 95 du manchon d'extraction 85 avec le dispositif correspondant 105 de la manchette inférieure de maintien peut être également réalisé sans difficulté.

La seringue d'injection 16 est engagée et mise en place à l'intérieur du manchon d'extraction 85, par l'intérieur de la manchette de maintien 100, de manière que l'élément de transmission flexible 18 soit engagé à l'intérieur de la manchette 100, cet élément flexible restant à l'extérieur de la manchette 100 sur une certaine longueur à son extrémité opposée au manchon d'extraction 85. La douille de manoeuvre 20 reliée à l'extrémité de l'élément de transmission flexible 18 reste à l'extérieur de la manchette 100.

La seringue d'injection 16 est mise en place dans le manchon d'extraction et verrouillée dans sa position de service grâce au dispositif de verrouillage 19 dont les billes 40 viennent se loger dans les trous 93 du manchon 85.

La manchette de guidage, le manchon d'extraction et la manchette de maintien sont introduits dans le tube d'essai et après mise en place de cet ensemble dans le tube, on vérifie le bon fonctionnement du dispositif 19. Le déverrouillage de la canne d'injection qui est commandé par la poignée 20 reliée à l'extrémité de l'élément de transmission souple 18.

On vérifie également que le retrait de la seringue d'injection 16 à travers le manchon d'extraction 85 et la manchette de maintien 100 peut être effectué sans accrochage.

Dans une seconde phase, on réalise le montage et le remplissage de la seringue en pâte d'étanchéité et en colle.

On effectue alors le remplissage des différents cylindres de la seringue d'injection 16, en s'assurant qu'avant remplissage, les pistons correspondants sont dans leur position basse.

On visse l'entretoise 65 (figure 5) sur le cylindre supérieur 52b. On remplit ensuite de colle le cylindre inférieur 55a, on remplit ensuite de pâte d'étanchéité le cylindre 52a qui est assemblé par vissage sur le cylindre de colle 55a. On assemble ensuite l'ensemble inférieur 52a, 55a au corps 38 du verrou 19.

On remplit de pâte d'étanchéité le cylindre supérieur 55b qui est ensuite fermé par le bouchon 72.

On remplit le cylindre supérieur 52b de colle puis on assemble ce cylindre au cylindre 55b.

On effectue enfin l'assemblage complet de la seringue d'injection 16.

On s'assure alors que l'ensemble des trous d'injection de pâte d'étanchéité et de colle se trouvent dans une position correcte, aussi bien en ce qui concerne leur orientation autour de l'axe de la canne que dans la direction axiale, en utilisant le gabarit 150 prévu à cet effet et représenté sur les figures 4 et 5. Le gabarit 150 comporte un pointeau inférieur 151 destiné à venir en coïncidence avec un trou repère 149 prévu dans le corps du verrou 19 (figure 4) ainsi que des pointeaux 152, 153, 154 et 155 destinés à venir en coïncidence avec les trous d'injection de pâte d'étanchéité et de colle 60, 62, 69 et 71, respectivement (figure 5). Le gabarit 150 comporte de plus deux étriers de maintien 156.

On introduit ensuite la seringue d'injection 16 dans le manchon d'extraction 85 et on oriente les billes 40 du verrou de façon à les placer en face des trous 93 du manchon 85.

On effectue le verrouillage par rotation de la douille de commande 20. On vérifie le bon fonctionnement du verrouillage puis on introduit le manchon 111 représenté sur la figure 18, sur l'extrémité du manchon 85 comportant le dispositif de liaison 95.

Toutes ces opérations et essais sont réalisés à l'extérieur de la boîte à eau.

Après remplissage de la seringue d'injection 16, il est nécessaire de tenir l'ensemble de la seringue et du manchon d'extraction en position verticale.

On réalise ensuite la mise en place de l'ensemble de la seringue d'injection et des manchettes dans la boîte à eau du générateur de vapeur.

Le tube à extraire a été préalablement coupé et nettoyé et les différentes opérations sont effectuées manuellement depuis l'intérieur de la boîte à eau.

On introduit la manchette supérieure de guidage dans le tube à extraire, puis on présente le dispositif de liaison supérieure 87 du manchon d'extraction 85 au niveau du dispositif de liaison correspondant 77 de la manchette supérieure de guidage 75, comme il est visible sur la figure 22A.

On réalise l'accrochage du manchon d'extraction 85 à la partie inférieure de la manchette 75 puis on fait glisser la manchette inférieure de maintien 100 sur l'élément flexible 18 jusqu'au moment où les manchons 110 et 111 se trouvent en butée l'un sur l'autre ; on réalise l'accrochage de la manchette de maintien 100 à l'extrémité inférieure du manchon d'extraction 85 puis on déboîte les manchons 110 et 111 en les faisant glisser sur la manchette 100. On déplace l'ensemble du dispositif vers le haut, jusqu'au moment où la partie supérieure en biseau de la manchette 75 parvient dans la zone de la coupe 14 du tube 5.

Pour faciliter le passage de la manchette de guidage dans la zone de coupe, on produit manuellement une rotation par quart de tour du dispositif de pose, depuis l'intérieur de la boîte à eau (flèche 150 figure 22C).

On achève la mise en place du dispositif de pose en le faisant glisser dans le tronçon 5a du tube à extraire et dans la partie restante du tube au-dessus de la coupe 14, jusqu'au moment où l'extrémité inférieure de la manchette de maintien 100 parvient au niveau de la face d'entrée 3a de la plaque tubulaire 3.

On engage alors le manchon 117 représenté sur la figure 20 à l'extrémité de la manchette de maintien 100, puis la platine 115 est elle-même engagée et fixée sur l'extrémité du manchon 117.

On réalise la fixation de la platine 115 sous la face 3a de la plaque tubulaire grâce à des dispositifs de bridage tel que représenté sur la figure 19A.

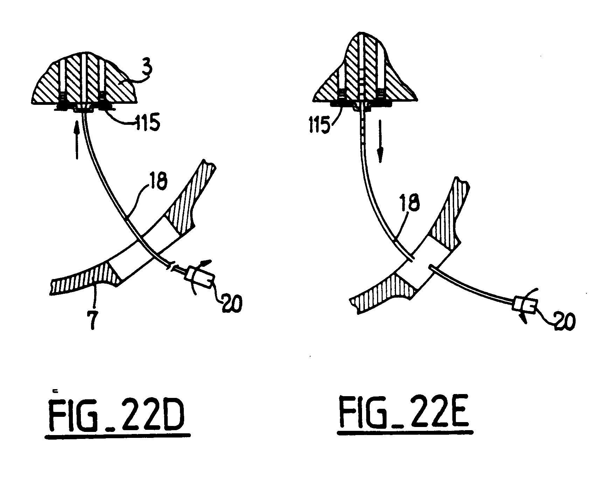

Le dispositif de pose est alors dans sa configuration représentée sur la figure 22D.

L'ensemble du dispositif de pose est alors maintenu dans une position parfaitement déterminée à l'intérieur du tube 5.

On réalise alors l'injection des joints de pâte d'étanchéité et de la colle en vissant la douille de manoeuvre 20 jusqu'à sa position de fin de course.

Les joints d'étanchéité sont constitués par l'injection de la pâte contenue dans les cylindres 52a et 52b par les ouvertures correspondantes situées en vis-à-vis des ouvertures 91 du manchon d'extraction 85. La pâte d'étanchéité maintenue entre les anneaux de chrome dur 89 et 90 constitue ainsi deux joints à la partie inférieure et à la partie supérieure de la canne d'injection, en-dessous des zones d'injection de colle. La colle contenue dans les cylindres 55a et 55b est injectée par les ouvertures correspondantes situées en vis-à-vis des ouvertures 92a et 92b du manchon d'extraction 85. La colle vient remplir l'espace annulaire entre le manchon 85 et le tube 5, au-dessus des joints constitués par la pâte d'étanchéité dans les zones 88a et 88b du manchon d'extraction 85.

On réalise alors le retrait de la seringue d'injection 16 après avoir déverrouillé le dispositif 19 par dévissage complet de la douille 20 (figure 22E).

Le retrait de la seringue 16 est assuré par traction sur l'élément flexible 18.

La seringue d'injection 16 est généralement extraite sans difficulté, la colle n'étant pas encore prise au moment de l'extraction. En cas de coïncement pendant le retrait de la canne d'injection, une procédure de secours peut être mise en oeuvre.

Après extraction de la canne, on vérifie que les pistons des ensembles d'injection sont bien dans leur position extrême et qu'en conséquence, l'intégralité des réserves de colle a bien été injectée entre le manchon d'extraction et le tube.

Pendant le retrait de la canne d'injection etc pendant le séchage de la colle, le manchon d'extraction est maintenu parfaitement en place par la manchette inférieure de maintien et par la platine fixée sous la plaque tubulaire.

Après un temps de séchage qui peut être de l'ordre de douze heures, il est possible de démonter la platine 115 et de séparer les dispositifs de liaison 95 et 105 de la manchette inférieure et du manchon d'extraction. Cette séparation peut être effectuée en faisant tourner la manchette de maintien 100 autour de son axe et vers la gauche, ce qui a pour effet de mettre en contact les parties en biseau des doigts d'accrochage en T. Ceci permet à ces doigts d'échapper et de réaliser la séparation du manchon 85 et de la manchette 100.

Il est alors possible d'effectuer l'extraction du tronçon du tube 5a grâce à un dispositif classique, la traction étant exercée sur le tube, depuis la face d'entrée 3a de la plaque tubulaire.

Pendant son extraction, le tronçon 5a du tube est parfaitement protégé et ne subit ni déformation ni détérioration dans la zone voisine de la première entretoise 10 dont le manchon d'extraction 85 réalise le pontage.

Pour permettre de réaliser facilement l'extraction dans les zones de la boîte à eau laissant un faible dégagement vertical, il est possible de recouper les parties du tube déjà extraites, avant de poursuivre l'extraction.

Dans le cas où le retrait de la seringue d'injection ne peut être réalisé complètement, par suite d'un coïncement à l'intérieur de la manchette inférieure de maintien, on met en oeuvre une procédure de secours qui sera décrite ci-dessous.

On repousse la seringue d'injection vers le haut de manière à la dégager complètement de la manchette inférieure de maintien, cette position de dégagement étant contrôlée grâce à un repère prévu sur l'élément flexible 18 qui se trouve placé au niveau de la platine 115 lorsque la seringue d'injection est dans la position voulue.

On maintient la seringue d'injection dans cette position et on procède au remplacement de la manchette de maintien en déverrouillant la platine 115 et en la retirant, puis en séparant la manchette de maintien 100 du manchon d'extraction 85 et enfin en retirant la manchette de maintien. La manchette de maintien est remplacée par une manchette de secours constituée de deux secteurs tubulaires constitués par un tube découpé suivant deux génératrices, les deux secteurs étant ensuite rapportés l'un en face de l'autre pour constituer la manchette de secours. On remet en place la platine de maintien 115 et on la verrouille sous la plaque tubulaire. On procède alors au retrait de la seringue d'injection.

Le tronçon de tube 5a peut alors être extrait comme précédemment, en préservant intégralement la zone à examiner.

L'invention permet donc de réaliser l'extraction d'un tronçon de tube d'un générateur de vapeur éloigné des extrémités de ce tube et par exemple d'un tronçon de tube situé au voisinage d'une entretoise, sans provoquer de détérioration ou de déformation de ce tube dont le pontage est assuré par un manchon d'extraction collé dans deux zones situées de part et d'autre de la zone du tube à protéger.

L'invention ne se limite pas au mode de réalisation qui a été décrit.

C'est ainsi qu'on peut imaginer des manchons d'extraction et des manchettes de guidage et de maintien de forme différente comportant des dispositifs de liaison différents de ceux qui ont été décrits.

On peut également imaginer des dispositifs de verrouillage et de mise en place de la canne d'injection d'un autre type que ceux qui ont été décrits.

Le dispositif peut être utilisé pour réaliser l'extraction d'un tronçon de tube situé à une hauteur quelconque dans le générateur de vapeur, et par exemple au niveau d'une plaque-entretoise supérieure de ce générateur. On utilisera dans ce but une manchette de maintien en plusieurs tronçons assemblés bout à bout et mis en place l'un après l'autre dans le tube du générateur de vapeur, jusqu'au moment où le manchon d'extraction est dans la position voulue.

On peut également utiliser une manchette de maintien constituée par un élément allongé tubulaire en une matière souple, telle qu'une matière plastique portant à son extrémité des moyens de liaison amovibles aux moyens correspondants du manchon d'extraction.

L'invention s'applique donc à l'extraction de tout tronçon rectiligne d'un tube de générateur de vapeur quelle que soit la position de ce tronçon.

## Revendications

1. Dispositif de pose d'un manchon d'extraction (85) dans un tube (5) de générateur de vapeur fixé par sertissage dans une plaque tubulaire (3) par ses parties d'extrémité, de façon à affleurer sur une première face (3a) ou face d'entrée de la plaque tubulaire et à être saillant par rapport à la seconde face (3b), le tronçon de tube à extraire depuis la face d'entrée (3a) de la plaque tubulaire, à l'intérieur d'une boîte à eau (7) du générateur de vapeur, étant d'abord séparé de la partie restante du tube par découpage dans une zone (14) éloignée des extrémités du tube et muni intérieurement, sur une partie au moins de sa longueur, d'un manchon d'extraction (85) dont la pose est réalisée par un dispositif comprenant une seringue d'injection de colle (16) engagée et fixée dans le manchon d'extraction (85) pour injecter une colle entre le manchon (85) et le tube (5) dans au moins deux zones, caractérisé par le fait qu'il comporte de plus :

– au moins une manchette de guidage (75) munie à l'une de ses extrémités de moyens de liaison (77) à des moyens correspondants (87) disposés à une première extrémité du manchon d'extraction (85),

– une manchette de maintien (100) munie à l'une de ses extrémités de moyens de liaison amovible (105) à des moyens correspondants (95) disposés à la seconde extrémité du manchon d'extraction (85),

– des moyens de fixation (115, 117) de la manchette de maintien (100) sur la face d'entrée de la plaque tubulaire,

– et des moyens de mise en place du manchon d'extraction (85) et de mise en place de commande et d'extraction de la seringue d'injection (16) comportant un organe de manoeuvre (17) et un élément de transmission allongé (18) dont le diamètre est inférieur au diamètre intérieur de la manchette de maintien (100), relié à l'une de ses extrémités à la seringue d'injection (16) et à son autre extrémité à l'organe de manoeuvre (17).

2. Dispositif de pose suivant la revendication 1, caractérisé par le fait que l'élément de transmission allongé (18) est relié à la seringue d'injection (16) par l'intermédiaire d'un dispositif de verrouillage (19) de la seringue d'injection (16), à l'intérieur du manchon d'extraction (85).

3. Dispositif de pose suivant la revendication 2, caractérisé par le fait que l'élément de transmission allongé (18) est constitué par un flexible (23) disposé suivant l'axe d'une gaine souple (24), le dispositif de verrouillage (19) étant constitué par un corps de verrou tubulaire (38) et une partie mobile de verrou (41) montée coulissante dans le corps de verrou (38), entre une position de verrouillage par extraction radiale de billes (40) placées dans des ouvertures radiales du corps de verrou (38) et une position de déverrouillage permettant le retrait des billes vers l'axe du corps de verrou (38), la partie mobile de verrou (41) pouvant être déplacée entre sa position de verrouillage et sa position de déverrouillage par un élément (47) entrainé en translation axiale par le flexible (23) de l'élément de commande allongé (18).

4. Dispositif de pose suivant la revendication 3, caractérisé par le fait que l'élément (47) mobile dans la direction axiale comporte une surface d'appui (49) pour l'extrémité d'une tige (51) montée coulissante dans un corps de seringue (50) et portant un ensemble de pistons d'injection (53a, 53b ; 57a 57b) montés mobiles dans des cylindres correspondants (52a, 52b ; 55a, 55b) constituant des éléments du corps de seringue (50).

5. Dispositif de pose suivant l'une quelconque des revendications 3 et 4, caractérisé par le fait que l'organe de manoeuvre (17) est constitué par une poignée (20) montée rotative et mobile en translation axiale sur une douille (21) et solidaire d'une vis (22) disposée suivant l'axe de la douille (21), engagée dans une ouverture taraudée de la douille (21) et solidaire, à son extrémité opposée à la poignée (20), de l'extrémité du flexible (23).

6. Dispositif de pose suivant l'une quelconque des revendications 3, 4 et 5, caractérisé par le fait que l'élément (47) est solidaire d'une des extrémités d'une tige (45) dont l'autre extrémité est reliée à l'extrémité du flexible (23) opposée à l'organe de manoeuvre (17), la tige (45) étant filetée sur une partie de sa longueur et coopérant avec un écrou (37) solidaire de la gaine (24) de l'élément de commande allongé (18) pour entrainer l'élément (47) dans un mouvement hélicoïdal à l'intérieur du corps de verrou (38), par l'intermédiaire du flexible (23).

7. Dispositif de pose suivant l'une quelconque des revendications 1 à 6, caractérisé par le fait que les moyens de liaison (77, 87) de la manchette de guidage (75) et du manchon d'extraction (85) sont constitués par des parties découpées de forme correspondante des extrémités de la manchette et du manchon respectivement, ces parties découpées pouvant être assemblées par engagement dans la direction radiale.

8. Dispositif de pose suivant l'une quelconque des revendications 1 à 7, caractérisé par le fait que les moyens de liaison amovibles (95, 105) du manchon d'extraction (85) et de la manchette de maintien (100) sont constitués par des parties découpées de la paroi de l'extrémité du manchon (85) et de la manchette (100), en forme de T, les parties découpées en forme de T (96a, 96b ; 102a, 102b) comportant un premier jeu de surfaces en regard (98a, 98b ; 106a, 106b) de direction radiale et un deuxième jeu de surfaces en regard (99a, 99b ; 107a, 107b) ayant une direction inclinée par rapport à la direction radiale et constituant un biseau, de manière que le manchon d'extraction (85) et la manchette de maintien (100) soient solidaires en rotation dans un sens et séparables par glissement des surfaces en biseau les unes sur les autres, dans l'autre sens.

9. Dispositif de pose suivant l'une quelconque des revendications 1 à 8, caractérisé par le fait que les moyens de fixation de la manchette de maintien (100) sur la face d'entrée (3a) de la plaque tubulaire (3) sont constitués par une platine (115) comportant des moyens de fixation amovibles dans les tubes (5) du générateur de vapeur et un manchon (117) fixé sur la platine (115) au niveau d'une ouverture de dégagement latérale destiné à recevoir l'extrémité de la manchette de maintien (100).

10. Dispositif de pose suivant l'une quelconque des revendications 1 à 9, caractérisé par le fait que la manchette de guidage (75) comporte à son extrémité opposée au dispositif de liaison (77) au manchon d'extraction (85), une partie en biseau (76) facilitant son introduction dans la zone découpée (14) du tube (5).

11. Dispositif de pose suivant l'une quelconque des revendications 1 à 10, caractérisé par le fait que la manchette de maintien (100) est constituée de plusieurs tronçons successifs assemblables bout à bout.

12. Dispositif de pose suivant l'une quelconque des revendications 1 à 10, caractérisé par le fait que la manchette de maintien (100) est constituée par un élément allongé souple portant à son extrémité des moyens de liaison amovible (105) aux moyens correspondants (95) du manchon d'extraction (85).

13. Dispositif de pose suivant l'une quelconque des revendications 1 à 12, caractérisé par le fait que la seringue d'injection (16) comporte deux cylindres (52a, 52b) d'injection de pâte d'étanchéité espacés suivant la direction axiale de la seringue d'injection (16) et deux cylindres (55a, 55b) d'injection de colle disposés de manière adjacente aux cylindres (52a, 52b) d'injection de pâte d'étanchéité et au-dessus de ces cylindres d'injection de pâte d'étanchéité, dans la position de service de la seringue (16).

14. Procédé d'extraction d'un tronçon (5a) de tube (5) d'un générateur de vapeur fixé par sertissage dans une plaque tubulaire (3) par ses parties d'extrémité de façon à affleurer sur une première face (3a) ou face d'entrée de la plaque tubulaire (3) et à être saillant par rapport à la seconde face (3b) de la plaque tubulaire, le tronçon (5a) de tube à extraire étant d'abord séparé du reste du tube par découpage dans une zone éloignée des extrémités du tube, un manchon d'extraction (85) étant introduit et fixé par collage, à l'intérieur du tube (5) grâce à un dispositif de colle (16) placé dans le manchon (85) et le tube extrait par traction, depuis la face d'entrée (3a) de la plaque tubulaire (3), après fixation par collage du manchon (85), caractérisé par le fait :

– qu'on introduit une manchette de guidage dans le tube (5),
– qu'on relie le manchon d'extraction (85) à une extrémité de la manchette de guidage (75) restant saillante par rapport à la face (3a) de la plaque tubulaire (3),
– qu'on relie le manchon d'extraction (85) à son extrémité opposée à la manchette de guidage, à une manchette de maintien (100),

– qu'on déplace le manchon d'extraction (85) et les manchettes (75, 100) dans le tube, jusqu'à la mise en place du manchon d'extraction (85) à l'emplacement voulu,

– qu'on fixe provisoirement le manchon d'extraction (85) dans le tube (5), en réalisant la fixation de l'extrémité de la manchette de maintien (100) opposée au manchon d'extraction (85), sur la face d'entrée (3a) de la plaque tubulaire,

– qu'on effectue une injection de colle entre le manchon d'extraction et le tube,

– qu'on extrait le dispositif d'injection de colle (16) du manchon d'extraction (85),

– et qu'on sépare, après séchage de la colle, la manchette de maintien (100) du manchon d'extraction (85) puis qu'on l'extrait du tube (5) avant d'effectuer l'extraction du tube (5).

## Patentansprüche

1. Vorrichtung zum Einsetzen einer Extraktionshülse (85) in ein Dampferzeugerrohr (5), das durch Aufweiten in einer Rohrwand an seinen Enden befestigt ist, so daß es mit einer ersten Seite (3a) oder Eingangsseite der Rohrwand bündig abschließt und gegenüber der zweiten Seite (3b) herausragt, wobei das aus der Eingangsseite (3a) der Rohrwand herauszuziehende Rohrleitungsstück in einem Wasserkasten (7) des Dampferzeugers zunächst vom Rest des Rohrs durch Abschneiden in einer von den Enden des Rohrs entfernten Zone (14) getrennt wird, die innen zumindest auf einem Teil ihrer Länge über eine Extraktionshülse (85) verfügt, die mit Hilfe einer Vorrichtung eingesetzt wird, die über eine Klebstoffspritze (16) verfügt, die in der Extraktionshülse (85) befestigt ist, um zwischen die Hülle (85) und das Rohr (5) Klebstoff zu spritzen, und zwar in mindestens zwei Bereichen, dadurch gekennzeichnet, daß sie außerdem folgende Teile aufweist:

– mindestens eine Führungsmanschette (75), die an einem ihrer Enden über eine Befestigungsvorrichtung (77) für eine entsprechende Vorrichtung (87) verfügt, die an einem ersten Ende der Extraktionshülse (85) sitzt;

– eine Haltemanschette (100), die an einem ihrer Enden eine bewegliche Befestigungsvorrichtung (105) für eine entsprechende Vorrichtung (87) an einem ersten Ende der Extraktionshülse aufweist;

– Befestigungsvorrichtungen (115, 117) der Haltemanschette (100) an der Eingangsseite der Rohrwand;

– und einer Vorrichtung zum Einsetzen der Extraktionshülse (85) und zur Steuerung und Herausnahme der Klebstoffspritze (16), die über eine Bedienungsvorrichtung (17) und ein verlängertes Verbindungselement (18) verfügt, dessen Durchmesser kleiner als der Durchmesser der Haltemanschette (100) ist, und das an einem Ende mit der Spritze (16) und am anderen mit der Bedienungsvorrichtung (17) verbunden ist.

2. Einsetzvorrichtung gemäß Anspruch 1, dadurch gekennzeichnet, daß das verlängerte Verbindungsstück (18) mit der Klebstoffspritze (16) durch eine Befestigungsvorrichtung (19) der Klebstoffspritze (16) innerhalb der Extraktionshülse (85) befestigt ist.

3. Einsetzvorrichtung gemäß Anspruch 2, dadurch gekennzeichnet, daß das verlängerte Verbindungsstück (18) aus einer biegsamen Welle (23) besteht, die innerhalb eines biegsamen Rohrs (24) verläuft, wobei die Befestigungsvorrichtung (19) aus dem Schaft eines röhrenförmigen Bolzens (38) und einem beweglichen Teil des Bolzens (41) besteht und letzterer in den Bolzenschaft (38) geschoben wird, und zwar zwischen einer Verriegelungsposition durch die radiale Herausnahme von Kugeln (40), die in Radialöffnungen des Bolzenschafts (38) sitzen, sowie einer Entriegelungsposition, in der die Kugeln in Achsrichtung des Bolzenschafts (38) herausgenommen werden können und der bewegliche Teil des Bolzens (41) zwischen seiner Verriegelungs- und Entriegelungsposition mit Hilfe eines Elements (47) bewegt werden kann, das in Achsrichtung durch die biegsame Welle (23) des verlängerten Betätigungselements (18) mitgenommen wird.

4. Einsetzvorrichtung gemäß Anspruch 3, dadurch gekennzeichnet, daß das in Achsrichtung bewegliche Element (47) über eine Auflagefläche (49) für das Ende einer Stange (51), die in den Schaft einer Spritze (50) geschoben werden kann, sowie über eine Anzahl Spritzkolben (53a, 53b; 57a, 57b), die beweglich in entsprechende, zur Spritze (50) gehörende Zylinder (52a, 52b; 55a, 55b) montiert sind, verfügt.

5. Einsetzvorrichtung gemäß einem der Ansprüche 3 und 4, dadurch gekennzeichnet, daß die Bedienungsvorrichtung (17) aus einem Griff (20) besteht, der drehend und beweglich in Achsrichtung auf einer Hülse (21) montiert ist und fest mit einer Schraube (22) verbunden ist, die achsgleich zur Hülse (21) sitzt und in eine innengewindete Öffnung der Hülse (21) geführt wird, und die auf der dem Griff (20) abgewandten Seite fest mit dem Ende der biegsamen Welle (23) verbunden ist.

6. Einsetzvorrichtung gemäß einem der Ansprüche 3, 4 und 5, dadurch gekennzeichnet, daß das Element (47) fest mit einem Ende einer Stange (45) verbunden ist, deren anderes Ende an dem der Bedienungsvorrichtung (17) entgegengesetzten Ende der Welle (23) sitzt, wobei die Stange (45) auf einem Teil ihrer Länge über ein Gewinde verfügt, das in eine Mutter (37) paßt, die fest mit dem Rohr (24) des verlängerten Betätigungselements (18) verbunden ist, um das Element (47) innerhalb des Bolzenschafts (38) mit Hilfe der Welle (23) in einer spiralförmigen Bewegung mitzunehmen.

7. Einsetzvorrichtung gemäß einem der Ansprüche 1 bis 6, dadurch gekennzeichnet, daß die Befestigungsvorrichtungen (77, 87) der Führungsmanschette (75) und der Extraktionshülse (85) aus ausgeschnittenen Teilen bestehen, wobei die Form des Manschettenendes der Form des Hülsenendes entspricht und diese ausgeschnittenen Enden durch Schieben in Radialrichtung zusammengefügt werden können.

8. Einsetzvorrichtung gemäß einem der Ansprüche 1 bis 7, dadurch gekennzeichnet, daß die abnehmbaren Befestigungsvorrichtungen (95, 105) der Extraktionshülse (85) und der Haltemanschette (100) aus aus der Wand des Endes der Hülse (85) und der Manschette in T-Form ausgeschnittenen Teilen besteht, wobei die ausgeschnittenen, T-förmigen Teile (96a, 96b; 102a, 102b) über einen ersten Satz gegenüberliegender Flächen (98a, 98b; 106a, 106b) in radialer Richtung und über einen zweiten Satz gegenüberliegender Flächen (99a, 99b; 107a, 107b), die gegenüber der radialen Richtung geneigt sind, verfügen und eine Schrägfläche bilden, so daß die Extraktionshülse (85) und die Haltemanschette (100) eine in eine Richtung drehende Einheit bilden und durch Übereinanderschieben der Schrägflächen in die andere Richtung wieder getrennt werden können.

9. Einsetzvorrichtung gemäß einem der Ansprüche 1 bis 8, dadurch gekennzeichnet, daß die Befestigungsvorrichtungen der Haltemanschette (100) an der Eingangsseite (3a) der Rohrwand (3) aus einer Platine (115) bestehen, die über abnehmbare Befestigungsvorrichtungen in den Dampfgeneratorrohren (5) und eine an der Platine (115) befestigte Hülse (117) verfügt, und zwar in Höhe einer seitlichen Austrittsöffnung, die das Ende der Haltemanschette (100) aufnehmen soll.

10. Einsetzvorrichtung gemäß einem der Ansprüche 1 bis 9, dadurch gekennzeichnet, daß die Führungsmanschette (75) an ihrem der Befestigungsvorrichtung (77) für die Extraktionshülse (85) entgegengesetzten Ende über eine Abschrägung (76) verfügt, die ihre Einführung in den ausgeschnittenen Bereich (14) des Rohrs (5) erleichtert.

11. Einsetzvorrichtung gemäß einem der Ansprüche 1 bis 10, dadurch gekennzeichnet, daß die Haltemanschette (100) aus mehreren aufeinanderfolgenden Teilstücken besteht, die Stück für Stück zusammengesetzt werden können.

12. Einsetzvorrichtung gemäß einem der Ansprüche 1 bis 10, dadurch gekennzeichnet, daß die Haltemanschette (100) aus einem verlängerten, elastischen Element besteht, das an seinem Ende eine abnehmbare Befestigungsvorrichtung (105) für die entsprechende Vorrichtung (95) der Extraktionshülse (85) hat.

13. Einsetzvorrichtung gemäß einem der Ansprüche 1 bis 12, dadurch gekennzeichnet, daß die Spritze (16) aus zwei Zylindern (52a, 52b) zum Einspritzen einer Dichtmasse besteht, die in Achsrichtung der Spritze (16) voneinander getrennt angeordnet sind, sowie aus zwei Zylindern (55a, 55b) zum Einspritzen eines Klebstoffs, die neben den Zylindern (52a, 52b) zum Einspritzen der Dichtmasse und über diesen Dichtmassezylindern in Betriebsposition der Spritze (16) angeordnet sind.

14. Verfahren zur Herausnahme eines Teilstücks (5a) eines Rohrs (5) eines Dampferzeugers, das an seinen Enden durch Aufweitung in einer Rohrwand (3) befestigt ist und bündig mit einer ersten Seite (3a) oder Eingangsseite der Rohrwand (3) abschließt und gegenüber der zweiten Seite (3b) der Rohrwand hervorsteht, wobei das herauszunehmende Rohrstück (5a) zunächst vom übrigen Rohr durch Herausschneiden in einer von den Rohrenden entfernten Zone getrennt wird, wozu eine Extraktionshülse (85) eingeführt und durch Kleben im Rohr (5) mit Hilfe einer Klebevorrichtung (16) befestigt wird, die sich in der Hülse (85) befindet, und das Rohr durch Ziehen von der Eingangsseite (3a) her aus der Rohrwand (3) herausgenommen wird, nach Befestigung durch Kleben der Hülse (85), dadurch gekennzeichnet, daß

– man eine Führungsmanschette in das Rohr (5) einführt,

– daß man die Extraktionshülse (85) mit einem über die Seite (3a) der Rohrwand (3) hinausstehenden Ende der Führungsmanschette (75) verbindet,

– daß man die Extraktionshülse (85) an ihrem der Führungsmanschette entgegengesetzten Ende mit einer Haltemanschette (100) verbindet,

– daß man die Extraktionshülse (85) und die Manschetten (75, 100) im Rohr bis zu der für die Extraktionshülse (85) beabsichtigten Stelle bewegt,

– daß man die Extraktionshülse (85) provisorisch im Rohr (5) befestigt, indem man das der Extraktionshülse (85) entgegengesetzte Ende der Haltemanschette (100) an der Eingangsseite (3a) der Rohrwand befestigt,

– daß man zwischen der Extraktionshülse (85) und dem Rohr Klebstoff einspritzt,

– daß man die Klebstoffspritzvorrichtung (16) aus der Extraktionshülse (85) herausnimmt,

– und daß man nach Trocknen des Klebstoffs die Haltemanschette (100) und die Extraktionshülse (85) wieder trennt und letztere dann aus dem Rohr (5) herausnimmt, bevor man das Rohr (5) herauszieht.

**Claims**

1. Device for fitting an extraction sleeve (85) into a steam-generator tube (5) fastened by crimping in a tube plate (3) by means of its end parts, so as to be flush with a first face (3a) or entry face of the tube plate and project relative to the second face (3b), the tube section which is to be extracted from the entry face (3a) of the tube plate, inside a water box (7) of the steam generator, first being separated from the remainder of the tube by cutting in a zone (14) remote from the ends of the tube and being equipped internally, over at least part of its length, with an extraction sleeve (85) which is installed by means of a device comprising a glue-injecting syringe (16) engaged and fastened in the extraction sleeve (85), in order to inject a glue between the sleeve (85) and the tube (5) in at least two zones, characterized in that it also has:

– at least one guide channel (75) equipped, at one of its ends, with means (77) for connection to corresponding means (87) located at a first end of the extraction sleeve (85),

– a retention channel (100) equipped, at one end, with means (105) of removable connection to corresponding means (95) located at the other end of the extraction sleeve (85),

– means (115, 117) for fastening the retention channel (100) to the entry face of the tube plate,

– and means for the installation of the extraction sleeve (85) and for the installation, control and extraction of the injection syringe (16), comprising an actuating member (17) and an elongate transmission element (18), the diameter of which is less than the internal diameter of the retention channel (100) and which is connected at one end to the injection syringe (16) and at its other end to the actuating member (17).

2. Fitting device according to claim 1, characterized in that the elongate transmission element (18) is connected to the injection syringe (16) by means of a locking device (19) for the injection syringe (16), inside the extraction sleeve (85).

3. Fitting device according to claim 2, characterized in that the elongate transmission element (18) consists of a flexible coupling (23) arranged along the axis of a flexible sheath (24), the locking device (19) consisting of a tubular lock body (38) and a movable lock part (41) slidably mounted in the lock body (38) between a locking position, produced by the radial withdrawal of balls (40) placed in radial orifices of the lock body (38), and a release position in which the balls are able to be retracted towards the axis of the lock body (38), the movable lock part (41) being movable between its locking position and its release position by means of an element (47) driven in axial translational movement by the flexible coupling (23) of the elongate control element (18).

4. Fitting device according to claim 3, characterized in that the axially movable element (47) has a bearing surface (49) for the end of a rod (51) slidably mounted in a syringe body (50) and carrying a set of injection pistons (53a, 53b; 57a, 57b) movably mounted in corresponding cylinders (52a, 52b; 55a, 55b) forming elements of the syringe body (50).

5. Fitting device according to one of claims 3 and 4, characterized in that the element (47) consists of a handle (20) mounted rotatably and movably in axial translational motion on a bush (21) and fixed to a screw (22) which is arranged along the axis of the bush (21) and is engaged in an internally threaded orifice of the bush (21) and which, at its end opposite the handle (20), is fixed to the end of the flexible coupling (23).

6. Fitting device according to one of claims 3, 4 and 5, characterized in that the element (47) is fixed to one of the ends of a rod (45), the other end of which is connected to that end of the flexible coupling (23) opposite the actuating member (17), the rod (45) being threaded over some of its length and interacting with a nut (37) fixed to the sheath (24) of the elongate control element (18), in order to drive the element (47) in a helical movement inside the lock body (38) by means of the flexible coupling (23).

7. Fitting device according to one of claims 1 to 6, characterised in that the connecting means (77, 87) of the guide channel (75) and of the extraction sleeve (85) consist of cut-out parts corresponding in shape to the ends of the channel and sleeve, respectively, these cut-out parts being connectable by engagement in the radial direction.

8. Fitting device according to one of claims 1 to 7, characterized in that the removable connecting means (95, 105) of the extraction sleeve (85) and of the retention channel (100) consist of T-shaped parts cut out from the wall of the end of the sleeve (85) and channel (100), the T-shaped cut-out parts (96a, 96b; 102a, 102b) comprising a first set of opposing surfaces (98a, 98b; 106a, 106b) in the radial direction and a second set of opposing surfaces (99a, 99b; 107a, 107b) in the direction inclined relative to the radial direction and forming a bevel, so that the extraction sleeve (85) and the retention channel (100) are integral in rotation in one direction and are separable by means of the sliding of the bevelled surfaces on one another in the other direction.

9. Fitting device according to any of claims 1 to 8, characterized in that the means for fastening the retention channel (100) to the entry face (3a) of the tube plate (3) consist of a strap (115) having removable means of fastening in the tubes (5) of the steam generator and a sleeve (117) fastened to the strap (115) in the region of an orifice with lateral clearance intended for receiving the end of the retention channel (100).

10. Fitting device according to any of claims 1 to 9, characterized in that the guide channel (75) has, at its end opposite the device (77) for connection to the extraction sleeve (85), a bevelled part (76) making it easier to introduce it into the cut-out zone (14) of the tube (5).

11. Fitting device according to any of claims 1 to 10, characterized in that the retention channel (100) consists of several successive portions which can be joined end to end.

12. Fitting device according to any of claims 1 to 10, characterized in that the retention channel (100) consists of a flexible elongate element carrying, at its end, means (105) of removable connection to the corresponding means (95) of the extraction sleeve (85).

13. Fitting device according to any of claims 1 to 12, characterized in that the injection syringe (16) comprises two sealant-injecting cylinders (52a, 52b) spaced in the axial direction of the injection syringe (16) and two glue-injecting cylinders (55a, 55b) arranged adjacent to the sealant-injecting cylinders (52a, 52b) and above these sealant-injecting cylinders, in the operating position of the syringe (16).

14. Process for extracting a section (5a) of a tube (5) of a steam generator, fastened by crimping in a tube plate (3) by means of its end parts, so as to be flush with a first face (3a) or entry face of the tube plate (3) and project relative to the second face (3b) of the tube plate, the tube section (5a) which is to be extracted first being separated from the rest of the tube by cutting in a zone remote from the ends of the tube, an extraction sleeve (85) being introduced and fastened by bonding inside the tube (5) by means of a glueing device (16) placed in the sleeve (85), and the tube being extracted by pulling from the entry face (3a) of the tube plate (3), after the sleeve (85) has been secured by bonding, characterized in that:

    – a guide channel is introduced into the tube (5),

    – the extracting sleeve (85) is connected to one end of the guide channel (75) still projecting relative to the face (3a) of the tube plate (3),

    – the extraction sleeve (85), at its end opposite the guide channel, is connected to a retention channel (100),

    – the extraction sleeve (85) and the channels (75, 100) are moved in the tube until the extraction sleeve (85) is in the desired position,

    – the extraction sleeve (85) is temporarily fastened in the tube (5) by fixing that end of the retention channel (100) remote from the extraction sleeve (85) to the entry face (3a) of the tube plate,

    – glue is injected between the extraction sleeve and the tube,

    – the glue-injecting device (16) is extracted from the extraction sleeve (85),

    – and, after the glue has dried, the retention channel (100) is separated from the extraction sleeve (85), and then withdrawn from the tube (5), before the extraction of the tube (5) is carried out.

**FIG_1**

FIG_ 2

FIG.3

FIG.4

# FIG_5

FIG.6

FIG.7

FIG.8

FIG_10

FIG_9

FIG_11

FIG_12

FIG.15

FIG.14

FIG.16

FIG.13

FIG_17

FIG_18

FIG_19

FIG_20

FIG.19A

FIG. 21

FIG. 22A

FIG. 22B

FIG. 22C

FIG_22D

FIG_22E